# EUROPEAN PATENT SPECIFICATION

(11) **EP 0 335 497 B1**
(45) Date of publication and mention of the grant of the patent: **14.04.1993**
(21) Application number: 89301829.1
(22) Date of filing: 24.02.1989
(51) Int. Cl.: E21B 10/22, F16J 15/34

(54) **Metal-to-metal face seal for rock bits**
Metallische Dichtung für Gesteinsbohrmeissel
Dispositif d'étanchéité métal sur métal pour trépan de roche

(30) Priority: 31.03.1988 US 176072; 31.03.1988 US 176073
(43) Date of publication of application: 04.10.1989
(73) Proprietor: SMITH INTERNATIONAL, INC., Houston, Texas 77205 (US)
(72) Inventor: Chia, Weng-Kwen Raymond, Irvine California 92715 (US); Anderson, George Franklin, Buena Park California 90620 (US)
(74) Representative: Enskat, Michael Antony Frank

(56) References cited:
- DE-A- 2 433 814
- GB-A- 2 071 739
- US-A- 3 180 648
- US-A- 3 370 895
- US-A- 3 604 523
- US-A- 3 810 637
- US-A- 4 092 054
- US-A- 4 277 109
- US-A- 4 306 727
- US-A- 4 344 629
- US-A- 4 560 175
- US-A- 4 722 404
- E. SCHMID: "Handbuch der Dichtungstechnik", 1981, pages 402-405, Expert verlag, Grafenau, DE
- MACHINE DESIGN, vol. 59, no. 13, 11th June 1987, pages 58-59, Cleveland, Ohio, US

## Description

This invention relates to a seal for the bearings of a rotary cone rock bit. More particularly, this invention relates to a high-speed metal-to-metal seal for a rotary cone rock bit, the dynamic metal sealing surfaces being of different hardnesses, prelapped prior to assembly, and resiliently biased towards each other.

There are prior art patents that describe composite seals that are fabricated of resilient material that encapsulates or is adjacent to a metal sealing ring. For example, U.S. Patent Nos. 4,344,629 and 4,394,020 describe and teach a metal-to-metal seal, the metal sealing surfaces of which are not prelapped prior to assembly. Both of these patents feature a resilient seal that initially operates to provide a seal while the metal-to-metal dynamic sealing surfaces are being. lapped-in during operation of the rotary cone rock bit in a borehole.

U.S. Patent No. 4,666,001 describes an earth-boring bit with metal-to-metal seals. A rigid face seal assembly is positioned between the cutter and bearing shaft of the rotary bit. The seal assembly moves axially to compensate for dynamic pressure changes in the lubricant adjacent to the seal. The metal-to-metal seal is designed to translate axially within an enlarged seal cavity during operation of the bit in a borehole to react to sudden changes of pressure across the seal face.

The foregoing patent is similar to a typical "Caterpillar" type seal, examples of which are found in U.S. Patent Nos. 3,180,648; 3,403,916; and 3,524,654; all of which are assigned to the Caterpillar Corporation and which teach improvements to their basic metal-to-metal seal. These patents, while they illustrate and teach metal-to-metal seals, do not elaborate on materials of the metal seals.

U.S. Patent no. 4,306,727 describes a dynamic seal for sealing between a rotary cutter and a drill bit journal in an underground formation drilling bit having rotatable cones. The seal utilizes a static elastomeric seal ring abutting a metal seal ring having a dynamic seal face. A metal sealing ring is biased against the cone sealing surface by an elastomer wedged between the intersection of the leg and the journal and an L-shaped metal dynamic ring adjacent the cone.

Another related U.S. patent, 4,466,622, teaches a very similar sealing arrangement, except that there are two dynamic L-shaped sealing rings that are suspended between two diagonally positioned elastomers such that the two L-shaped rings float in a seal cavity formed between the cone and the journal.

The ′727 patent, while it describes a metal-to-metal seal, does not elaborate on the materials of the dynamic seal faces within a rotary cone rock bit. The same is true for the ′622 patent wherein back-to-back dynamic sealing rings are positioned within a sealed cavity of a rotary cone rock bit. These two patents emphasize the elastomeric material biased between the leg backface and the metal sealing ring adjacent the cone or similar L-shaped ring backed against the first ring.

Another prior art U.S. Patent No. 4,722,404 describes a low friction seal assembly for use with a rotary drill bit having bit cutters manufactured by casting the rotary cutters. The seal assembly includes a seal element having a Belleville spring surrounded by an elastomeric material. The static side of the seal is positioned in a roughened groove in the cast cone such that the inner dynamic sealing side of the Belleville seal is positioned near the intersection of the journal and the leg backface. Typically, a Belleville seal has the static side of the seal at this intersection of the journal in the leg backface, the dynamic sealing surface being adjacent the rotary cone. One embodiment of this patent discloses a metal ring adjacent the dynamic side of the Belleville seal that runs against a surface nearest the intersection of the journal and the leg backface.

The ′404 patent, while it describes a Belleville type seal, illustrates the Belleville seal in a reverse configuration than is typical of a Belleville seal in a rotary cone rock bit. Since the dynamic seal surface is opposite to a standard Belleville seal, the Belleville seal as shown will act as a natural pressure relieving valve. Unfortunately, the valving action will admit debris that exteriorly surrounds the seal cavity. Standard Belleville type seals in the typical, reverse orientation will valve in the opposite direction, hence, lubricant will be expelled past the dynamic sealing faces thus purging the seal face of any detritus, rather than admitting contaminants.

The present invention teaches the use of a static metal sealing ring, the sealing surface of which comprises a relatively softer metallic material than an opposite dynamic sealing surface. The static or non-moving seal ring of softer material is lapped against the harder material on the dynamic oppositely facing sealing ring. The hard and soft materials of the seal rings are prelapped prior to assembly of the seal between a journal bearing and a rotary cone. The softer sealing surface is preferably smaller in surface area than the harder dynamic sealing surface to accommodate for cone wobble or eccentricities that may occur between the cone and the journal during operation of the rotary cone rock bit in a borehole.

The first mentioned prior art patents assigned to the same assignee as the present invention taught the use of metal-to-metal seals that were not prelapped prior to use, the basic seal relying on a resilient material to provide the initial seal during the lapping process. The present invention differs in that the metal rings of the seal are prelapped, the softer static seal ring material being run or lapped against the harder dynamic surface of the dynamic sealing ring before the rings are installed in the rock bit.

According to the present invention there is provided a metal-to-metal seal for a rotary cone rock bit, said seal being positioned in a seal cavity formed between a leg of the rock bit and a rotatable cone mounted on a journal bearing extending from the leg of the bit, said seal comprising a first metal ring and a first sealing surface formed from a metallic material at one axial side of the metal ring serving as part of the metal-to-metal seal, and a resilient material confined within the seal cavity and positioned on the opposite axial side of the first metal ring to the first sealing surface for urging the first metal sealing surface against a second metal sealing surface for maintaining the first and second sealing surfaces in sealing engagement, the seal being characterized by: a second ring inserted into a circumferential cavity in the cone and secured to the cone, the second ring defining said second metal sealing surface and being positioned axially adjacent the first sealing surface on the metal ring, the second metal sealing surface being formed from a metallic material which is harder than the metallic material forming the first sealing surface, the first and second sealing surfaces being prelapped to substantially perfect a seal between the sealing surfaces prior to insertion of the two metal rings into the seal cavity.

A metal-to-metal seal embodying the present invention will now be described, by way of example, with reference to the accompanying drawings, in which:
FIG. 1 is a perspective view of a typical rotary cone rock bit;
FIG. 2 is a partially broken away section of a leg of a rotary cone rock bit illustrating a portion of the cone mounted onto a journal bearing including a seal cavity formed between the journal bearing and the rotary cone;
FIG. 3 is an enlarged view of an exemplary metal-to-metal seal housed within the seal cavity shown in FIG. 2;
FIG. 4 is an alternative embodiment of a metal-to-metal seal enclosed within a seal cavity formed between the journal bearing and the cone of the rock bit;
FIG. 5 is yet another embodiment of a metal-to-metal seal;
FIG. 6 is a partially broken away section of a leg of a rotary cone rock bit illustrating another embodiment of metal-to-metal seal with a Belleville spring;
FIG. 7 is an enlarged view of the metal-to-metal Belleville seal in FIG. 6;
FIG. 8 illustrates an alternative embodiment of a metal-to-metal Belleville seal; and
FIG. 9 is yet another embodiment of a metal-to-metal Belleville seal.

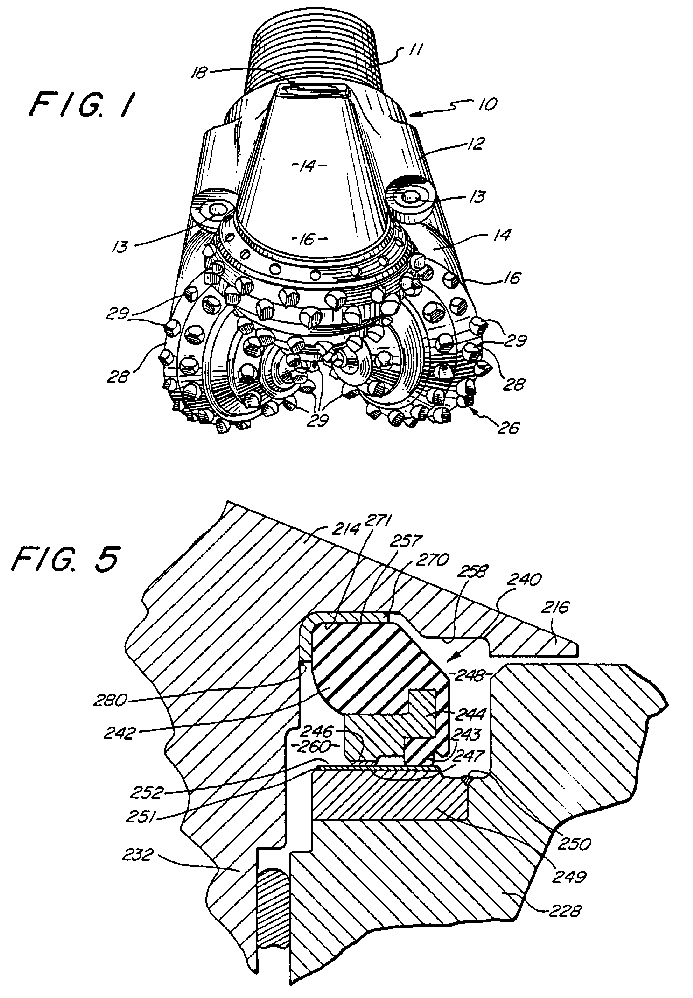

With reference now to FIG. 1, the sealed bearing rotary cone rock bit generally designated as 10 consists of rock bit body 12, upper pin end 11, and a lower cutting end generally designated as 26. Each cone 28 making up the cutting end 26 is attached to a leg 14 that terminates in a shirttail portion 16. Each of the cones 28 has, for example, a multiplicity of equally spaced tungsten carbide cutter inserts 29 interference fitted within insert holes formed in the cone bodies 28. A lubricant reservoir generally designated as 18 is provided in each of the legs 14 to supply lubricant to bearing surfaces formed between the rotary cones and their respective journals. Three or more nozzles 13 communicate with a chamber formed inside the bit body 12 (not shown). The chamber receives drilling fluid or "mud" through the upper pin end 11. The fluid then is directed out through the nozzles 13 during bit operation.

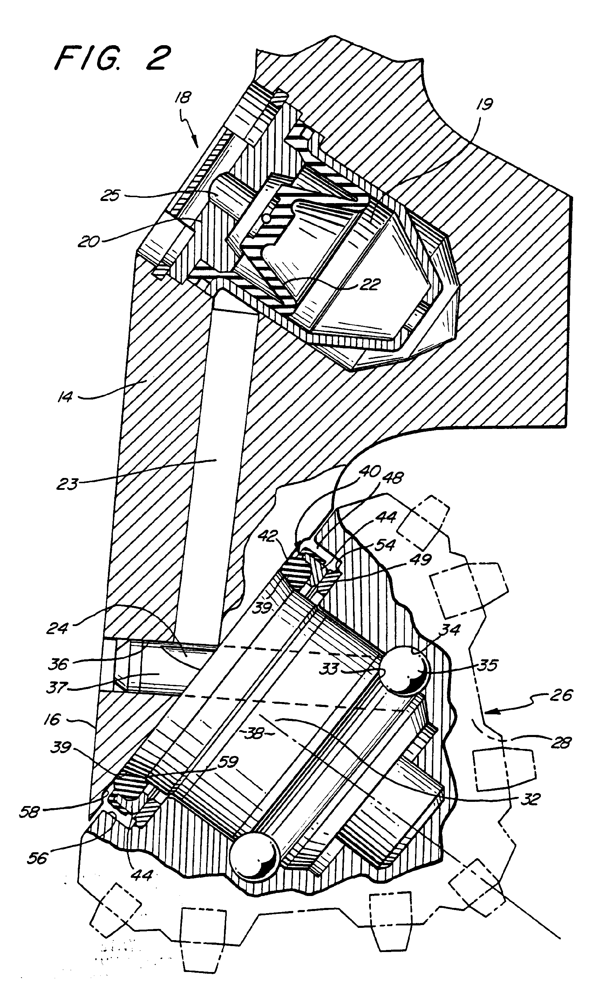

Turning now to FIG. 2, the rock bit leg 14 is shown in cross-section revealing the lubricant reservoir system generally designated as 18. The reservoir system comprises a reservoir cover cap 20 which closes a lubricant reservoir cavity 19. The reservoir 19 is isolated from the cover cap by a resilient diaphragm 22; the diaphragm being responsive to exterior pressures through a hole 25 formed in the cover cap 20. Lubricant is passed down a lubricant channel 23 formed in the leg 14 toward a ball hole 36 formed through the shirttail portion 16. Lubricant then enters into a lubricant channel 24 formed in a ball hole plug 37. Lubricant passes to the bearing surfaces formed between the journal 32 and the cone 28 via ball races 33 and 34.

A series of cone retention balls 35 are passed through the ball hole 36 into the bearing race 33 and 34 formed in the journal and the cone respectively. After all the cone retention balls are in place, a ball hole plug 37 is typically inserted and welded in place to retain the balls within the race.

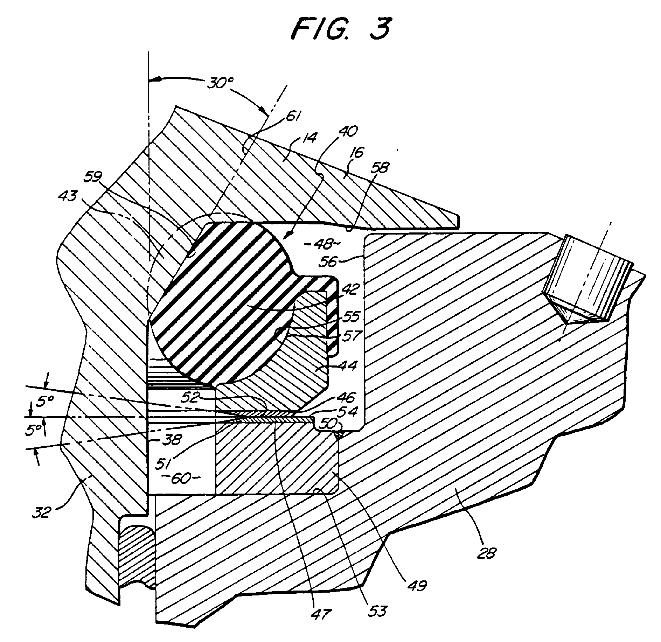

With reference now to the exemplary embodiments depicted in FIGS. 2 and 3, a metal-to-metal seal, generally designated as 40, consists of an outer resilient material 42 that at least partially encapsulates an inner metal ring 44. The rubber-like resilient material 42 is designed to be larger in size than a portion of a seal cavity formed by the leg backface 58, a radially extending wall 56 in the cone, a circumferential surface 54, a conical ramp 39 on the leg, and the bearing surface 38 of the journal 32. A portion of the resilient material 43 is compressed by the ramp 39 and leg backface 58 to urge the sealing surface 47 of the metal insert 46 against a radially disposed sealing surface 52 formed on a metal layer 51 on a ring 49 in the cone 28. The resilient material 42 may, for example, consist of nitrile rubber.

The partially encapsulated ring 44 has, for example, metallurgically bonded thereto, a relatively soft metallic material 46 that has an exterior radial sealing surface 47 that is highly polished and lapped against the similarly polished and lapped sealing surface 52 formed from harder material 51 that is, for example, metallurgically bonded to and confined within the radial ring 49.

The radially disposed ring 49 is preferably metallurgically bonded at the annular intersection 50. The ring 49 may, for example, be laser welded and hermetically sealed at intersection 50 by a process as described in U.S. Patent No. 4,560,175 and incorporated herein by reference. The ring is adapted to fit within a recess 53 formed within a cone mouth or seal cavity 48 of the cone 28.

The two lapped materials 46 and 51 are, for example, prelapped together prior to inserting the radially disposed ring 49 within the recess 53 formed in the cone mouth of the cone 28. The lapped surface 52 of hard material 51 bonded within the metal ring 49 has a surface area larger than the lapped surface area 47 of the softer material 46. The larger sealing surface 52 on the harder material 51 accommodates for cone wobble or eccentricities that may occur during operation of the rock bit 10 in a borehole.

With reference now to the enlarged drawing of FIG. 3, the seal generally designated as 40 is shown compressed against the ramp 39 and leg backface 58 within the seal cavity 48. The enlarged portion 43, shown in phantom, is compressed within the seal cavity 48 to assure contact of the lapped surface 47 of the softer metallic material 46 against the lapped surface 52 of the harder metallic material 51 bonded to ring 49.

The seal surface material 46 bonded to or part of the encapsulated ring 44 is made of a metal such as stellite or Tribaloy, which is a trademark of Stoody Delor Stellite Corporation of California. The Tribaloy material is preferred. Tribaloy metal generally contains cobalt, silicon and molybdenum, while some of the Tribaloy may contain portions of chromium, nickel or tungsten as well as other elements. The Tribaloy material may range in hardness from Rockwell C 42 to 62. An example of the preferred Tribaloy wear-resistant intermetallic materials is designated as T-400, T-700 or T-800. The preferred grade of Tribaloy is T-800 having a Rockwell C hardness of 62. Tribaloy T-800 has a composition comprising 3.0 percent nickel plus iron, 28.5 percent molybdenum, 17.5 percent chromium, 3.4 percent silicon, 0.08 percent carbon, and the balance cobalt, with a Rockwell C hardness of 62.

The material 51 on the inner ring in the cone is fabricated from, for example, tungsten carbide having a Rockwell C hardness about ten points higher than the Rockwell C hardness of the opposing softer material 46. For example, if the Tribaloy material 46 is T-800 with a Rockwell C hardness of 62 the Rockwell C hardness of the opposing tungsten carbide material 51 would be about 72. The two surfaces (47 of material 46 and 52 of material 51) should preferably be lapped flat within two helium light bands with a surface finish from 0.05 to 0.3 micrometers rms. The encapsulating resilient material bonded to the metal ring 44 is preferably fabricated from a nitrile composition manufactured by Royal Seal of Cucamonga, California. The resilient material 42 has a Shore hardness of between 50 and 70. A preferred Shore hardness of the nitrile material would be 60.

The radially disposed inner ring 49 and outer ring 44 are prelapped together prior to assembly of the rings within the seal cavity 48. It would be very difficult to lap a sealing surface within the cavity or recess 53 formed in the cone 28. Hence, the seal rings 44 and 49 are carefully paired and their sealing surfaces 47 and 52 completely finished prior to metallurgically securing the radial ring 49 within the cone mouth or recess 53.

Moreover, the rings 44 and 49 could be fabricated from Tribaloy and tungsten carbide respectively, thereby eliminating the bonding or fusion process whereby the preferred material (Tribaloy 46 and tungsten carbide 51) is secured to rings 44 and 49.

The seal cavity clearly shown in FIG. 3 is divided up in two annular areas 48 and 60. It is preferred that the internal area 60 be somewhat larger in size than the outer annular area 48. The annulus 60 is formed between the inner diameter of rings 49 and 44 and the inside surface of the resilient material 42 and contains internal lubricant from the lube reservoir system 18. The area 48 that is exterior to the seal assembly 40 is exposed to the outside environment which includes mud and detritus generated when the bit works in a borehole.

This type of seal 40 is favored when higher grease pressures occur within the internal annulus 60 while lubricating the bearing surfaces. Higher internal grease pressures would serve to protect the lapped surfaces since any breach of the seal between the two lapped surfaces would cause the lubricant under higher pressures to escape outwardly from the cavity 60. Therefore, higher internal lube pressures prevent any detritus that may be in the outer seal cavity 48 from ruining the lapped sealing surfaces.

The resilient nitrile material 42 bonded to the outer ring 44 at surfaces 55 of the ring and 57 of the nitrile material may be secured together through well-known vulcanization processes. It would also be desirable to roughen the surface 52 to about three micrometers rms for better bonding of the nitrile to the ring 44.

The ramp angle of the conical ramp 39 with respect to a centerline of the journal bearing (not shown) should be between 10 and 45 degrees. The preferred ramp angle is about 30 degrees as shown in FIG. 3. The ramp angle 39 helps prevent the enlarged resilient material 42 from rotating against the journal bearing 32.

The nitrile rubber 42 may additionally be bonded to the surface 59 formed by the ramp 39. The ramp surface 59, for example, is preferably roughened to about three micrometers rms prior to bonding surface 57 of the rubber 42 to the ramp. An adhesive may be used to adhere the surfaces together such as Loc-Tite super bond thermal cycle gel designated as 499 by the manufacturer, Loc-Tite Corporation of Connecticut.

A shallow radially disposed angle 63, about five degrees on each of the rings 44 and 49 has two purposes. The first purpose is to feed the grease from the grease reservoir 18 to the sealing surface 47 and 52. The second purpose is to provide an easy transition and a good seal surface as the opposing surfaces wear during use. Also, the shallow angle 63 helps to prevent grooving of the opposing surfaces during operation of the bit in a borehole.

The metal-to-metal seal configuration as shown and just described with respect to FIGS. 2 and 3, may alternatively be comprised of a separate O-ring that nests within the dynamic metal ring, the O-ring being urged against the metal ring by the ramp as illustrated in FIGS. 2 and 3.

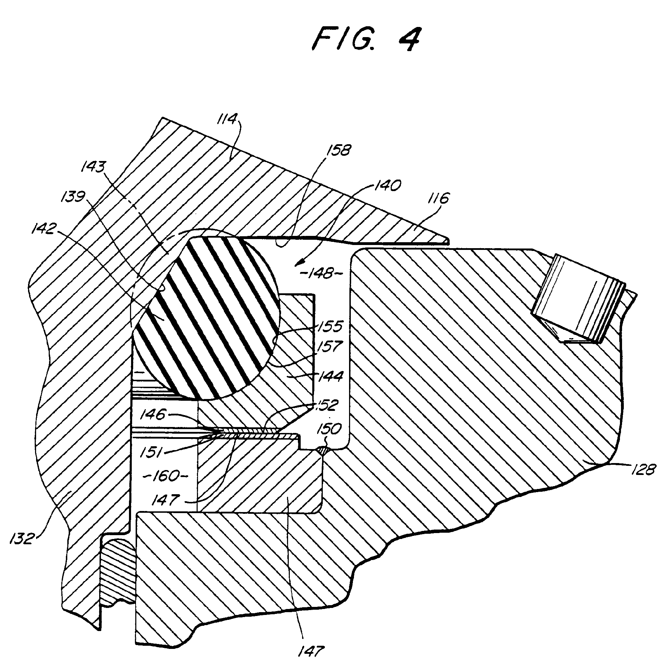

For example, FIG. 4 illustrates an alternative embodiment wherein the seal assembly generally designated as 140 is comprised of a separate O-ring 142 that nests within a concave surface 155 formed by a metal ring 144. The O-ring 142 is biased against the concave surface 155 by a conical ramp 139 formed between the journal bearing 132 and the leg backface 158. Polished surfaces 147 and 152 of Tribaloy material 146 and tungsten carbide material 151 are urged together by the combination of the oversized O-ring 142 (phantom 143) and the ramp angle 139 to assure the prelapped surfaces remain in sealing engagement during operation of the bit in a borehole. The metal-to-metal seal configuration 140 operates exactly the same as that which was described with respect to FIGS. 2 and 3, with the exception that the O-ring 142 is not bonded or secured to the dynamic metal ring 144.

The concave surface 155 in ring 144 may be slightly roughened to assure that the surface 157 of the O-ring 142 does not slip within the concave surface 155 during operation of the bit.

The ring 149, preferably of tungsten carbide, is secured within the cone mouth 148 of cone 128 by a metallurgical bond 150 at the juncture between the outer peripheral diameter of ring 149 in the cone mouth opening 148. Again, the ring 149 may be welded to the cone by laser weld machine.

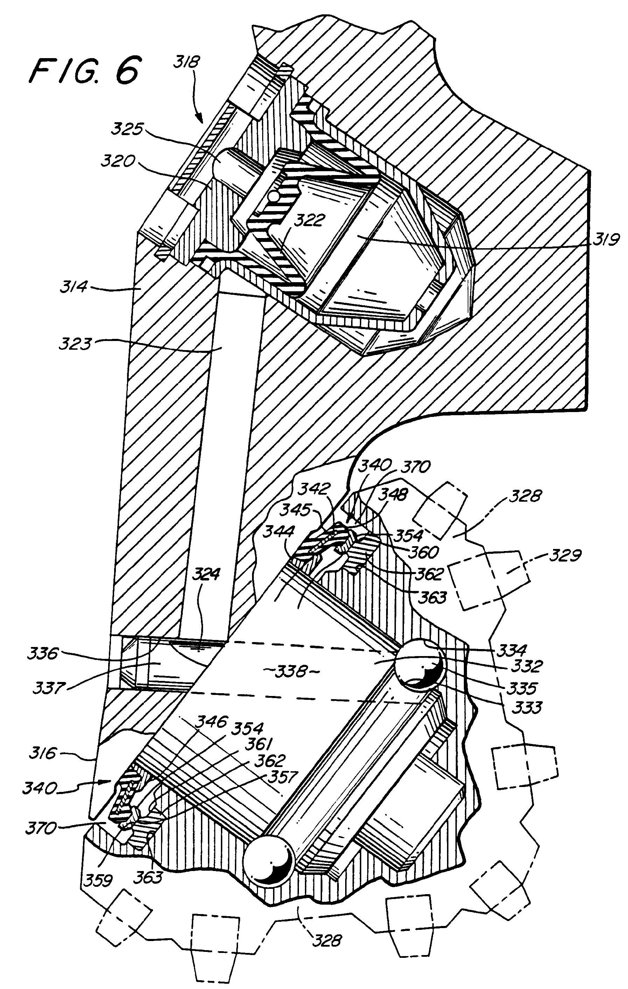

Yet another embodiment is illustrated in FIG. 5 wherein the metal-to-metal seal assembly generally designated as 240 comprises a dynamic metal ring 244 which is partially encapsulated within a rubber nitrile material 242. The nitrile material almost completely surrounds the inner ring 244 to form a rubber seal band 243. The purpose of the seal band or "bump" 243 is to provide added metal-to-metal seal protection during operation of the seal in a rock bit. The nitrile resilient material 242 is further bonded or secured to the surface 271 of a separate circular lock ring 270. The ring 270 in turn is secured to the journal bearing 232 at the juncture between the journal bearing 232 and the leg backface 258. The lock ring 270 is secured by adhesives or preferably metallurgically bonded or secured to the bearing 232 by a laser weld 280. The dynamic metal ring 244 has a layer of Tribaloy 246 secured to the ring, the surface 247 being highly polished. The surface 247 mates with a polished surface 252 of the preferred tungsten carbide material 251 secured to ring 249. The ring 249 is attached through the cone mouth 248 of cone 228 by a laser weld 250 also as heretofore described. It should again be noted that the surface area of polished surface 252 of the tungsten carbide 251 is much larger than the surface area 247 of the Tribaloy material 246. Again, this is to accommodate possible cone wobble or eccentricities between the rotating cone and its respective journal. The rubber bump 243 acts to prevent drilling mud and detritus from getting to the polished sealed surfaces 247 and 252.

The Tribaloy material 46, 146 and 246 and the harder opposing material 51, 151 and 251 shown in FIGS. 2, 3, 4 and 5 may be deposited on their respective backup rings by, for example, plasma spray or D-gun. Alternatively, the material may be welded or brazed in place without departing from the scope of this invention.

The nitrile material 242 may be secured through vulcanization or secured with the adhesives heretofore mentioned to assure the integrity of the seal generally designated as 240.

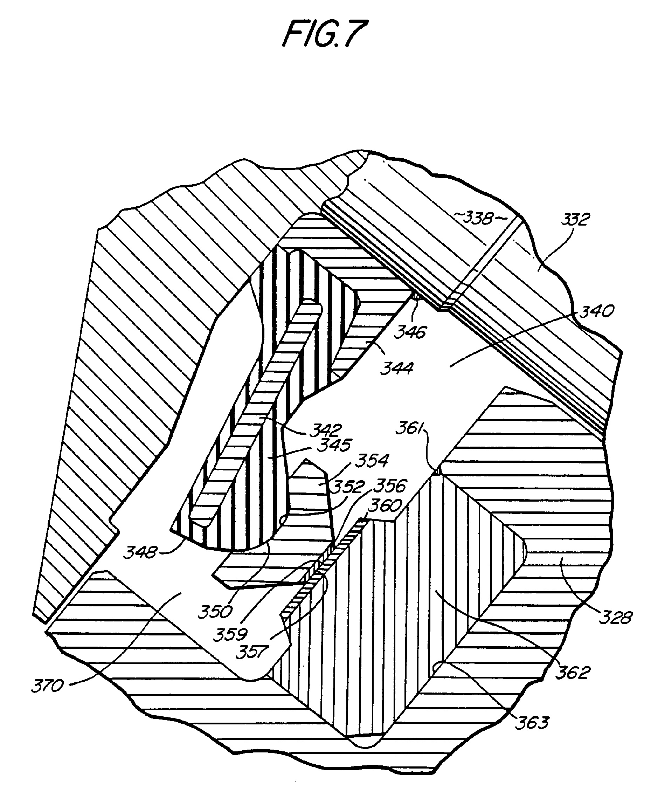

With reference now to the embodiments depicted in FIGS. 6 and 7, a metal-to-metal Belleville seal, generally designated as 340, consists of a rubber encapsulated Belleville spring 342 and a partially encapsulated annular lock ring 344. The inner lock ring 344 is preferably metallurgically secured to the journal 332 with a 360 degree laser weld at an intersection 346.

The outer peripheral end 348 of the Belleville seal 340 forms an annular rounded convex surface 350 that nests within a complementary concave surface 352 formed in an annular metal ring 354. The ring 354 has, for example, metallurgically bonded thereto a relatively softer metallic material 356 that has an exterior radially extending sealing surface 357 that is highly polished and lapped sealing surface 359 formed from an outer material 360 that is, for example, metallurgically bonded to and confined within a radial ring 362. The annular ring 362 fits within a recess 363 formed within a cone mouth or seal cavity 370 of the cone 328 and is preferably metallurgically bonded at the annular intersection 361.

The lapped surface 359 of harder material 360 bonded within metal ring 362 has a surface area larger than the lapped surface area 357 of the softer material 356. The larger sealing surface 359 on the harder material 360 accommodates for cone wobble or eccentricities that may occur during operation of the rock bit in a borehole.

The sealing surface of the ring 354 adjacent the end 348 of the Belleville seal 340 is made of a metal such as stellite or Tribaloy. The Tribaloy material is preferred as hereinabove described. The preferred grade of Tribaloy is T-800 having a Rockwell C hardness of 62. The material 360 is fabricated from, for example, tungsten carbide having a Rockwell C hardness about ten points harder than the Rockwell C hardness of the opposing softer material 356.

The radially disposed ring 362 and annular ring 354 are prelapped together prior to assembly of the rings within the seal cavity 370. The seal rings 354 and 360 are carefully paired and their sealing surfaces 357 and 359 completely finished prior to metallurgically securing the radial ring 362 within the cone mouth or recess 363.

Moreover, the rings 354 and 362 could be fabricated from Tribaloy and tungsten carbide, respectively, thereby eliminating the bonding or fusion process whereby the preferred materials are secured to the rings.

The resilient material 345 encapsulating the Belleville spring 342 is preferably bonded to the annular concave surface 352 or ring 354 at surface 350 near the end 348 of the Belleville spring 340. Surfaces 350 and 352 may be bonded together by well-known vulcanization processes. It would also be desirable to roughen the surface 352 to about a three micrometers rms for better bonding of the resilient material 345 to the ring 354. The resilient material 345 is typically fabricated from a nitrile material having a Shore hardness of between 50 and 70.

While it is preferred that the annular ring 354 be bonded or secured to the surface 350 of the Belleville spring 340, the two surfaces need not be bonded as long as an effective seal is established between the annular bump 350 and its conforming recess 352 in the ring 354.

It is preferred that the ring 354 be secured at the surface 352 of the ring and convex surface 350 of the Belleville seal 340 by an adhesive such as Loc-Tite 499. The ring may also be bonded to the Belleville seal by well-known vulcanization processes.

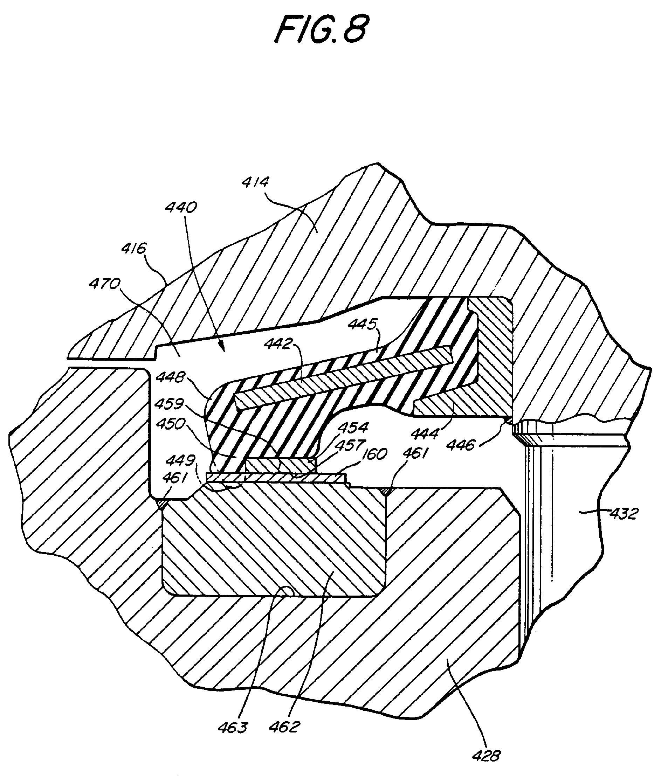

Turning now to FIGURE 8, an alternative embodiment is shown wherein the seal assembly, generally designated as 440, is comprised of a Belleville spring 442 encapsulated within, for example, a nitrile rubber-like material 445. The inner diameter, or base, of the Belleville spring is comprised of an annular metal lock ring 444 that is bonded or secured to the nitrile rubber 445. Again, the ring 444 is preferably secured to journal 432 by a weld at junction 446. The outer peripheral end 448 of the Belleville spring 440 is secured to an annular radially disposed metal ring 454.

An annular seal bump 450 protrudes from the outer peripheral end 448 and extends past the surface of the radially disposed ring 454 such that it provides a seal. to help protect the sealing surfaces. The nitrile rubber 445 in the free state is shown in phantom 449, this portion being compressed when the seal surfaces are in contact with one another.

As heretofore stated, the ring 454 is bonded to the nitrile rubber 445 encapsulating the Belleville spring 442. The ring 454 is fabricated from a metal such as stellite or preferably Tribaloy.

A radially disposed ring 462 is inlaid into a recess 463 formed in the cone mouth 470 in cone 428. Again, the radially disposed ring 462 is preferably laser welded into the cone 428 at a junction 461. A layer of hard material such as the preferred tungsten carbide 460 is bonded or secured to the ring 462. The opposing sealing surfaces 457 of the Tribaloy material 454 and surface 459 of the tungsten carbide material 460 are prelapped together prior to assembly of the sealing rings within the seal cavity or cone mouth 470.

The annular bump 450, when the sealing surface and are urged together by the Belleville spring is compressed against the outer peripheral surface of the tungsten carbide material 460. The bump thus provides a seal for the polished surfaces 457 and 459 during operation of the bit in a borehole.

It should additionally be noted that a Belleville type seal generally acts as a one-way valve. In the event internal pressures within the rock bit and within the sealed lubrication system exceed certain limits, the Belleville seal will break the seal between polished surfaces 457 and 459, thus, allowing lubricant under excess pressure to pass the sealing surfaces to the exterior of the bit. Thus, it can be realized that this one-way valving action prevents detritus or debris from entering or ruining the polished sealing surfaces. The bump 450 acts as a backup seal to discourage any detritus or debris from entering the protected bearing surfaces through the seal.

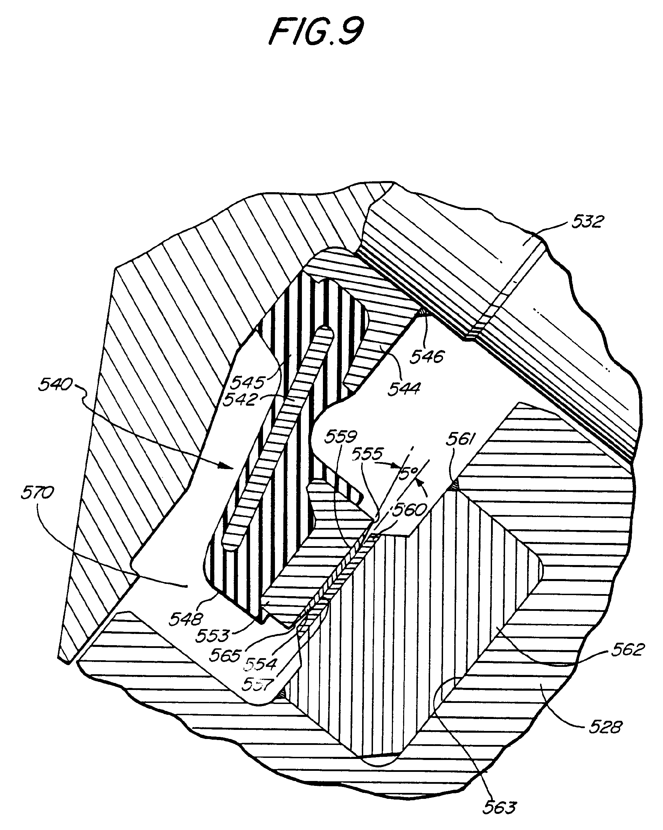

And yet another alternative embodiment is illustrated in FIG. 9 wherein the metal-to-metal seal assembly generally designated as 540 comprises a Belleville spring 542 encapsulated within rubber 545, the spring being secured to an inner lock ring 544, the lock ring again, being laser welded to the journal 532. The outer peripheral end 548 partially encapsulates a radially disposed annular ring 562. A layer of the preferred Tribaloy material 554 is metallurgically bonded to the ring 553. A flattened surface 557 of Tribaloy material is polished and mated to the surface 559 of the preferred tungsten carbide material 560. The tungsten carbide is metallurgically bonded to the radially disposed ring 562 seated within an annular groove 563 formed in cone 528. The ring, again, is welded at the intersection 561 within the cone 528. The exposed surface 555 of the ring 553 is angled approximately five degrees with respect to the surface 559 of tungsten carbide 560 both on the inboard radial face at 555 of the partial encapsulated ring 553 and at the outboard radial face.

Again, the surfaces 557 of Tribaloy material 554 and the surface 559 of the tungsten carbide material 560 are prelapped and polished to the parameters heretofore described, preferably prior to the insertion of annular ring 562 within the cone 558.

It will of course be realized that various modifications can be made in the design and operation of the present invention. Thus, while the principal preferred construction and mode of operation of the invention have been explained in what is now considered to represent its best embodiments, which have been illustrated and described, it should be understood that within the scope of the appended claims, the invention may be practiced otherwise than as specifically illustrated and described.

## Claims

1. A metal-to-metal seal (40) for a rotary cone rock bit (10), said seal (10) being positioned in a seal cavity (48) formed between a leg (14) of the rock bit (10) and a rotatable cone (28) mounted on a journal bearing extending from the leg (14) of the bit (10), said seal (40) comprising a first metal ring (44) and a first sealing surface (47) formed from a metallic material at one axial side of the metal ring (44) serving as part of the metal-to-metal seal (40), and a resilient material (42) confined within the seal cavity (48) and positioned on the opposite axial side of the first metal ring (44) to the first sealing surface (47) for urging the first metal sealing surface (47) against a second metal sealing surface (52) for maintaining the first and second sealing surfaces (47,52) in sealing engagement, the seal being characterized by:
a second ring (49) inserted into a circumferential cavity in the cone (28) and secured to the cone (28), the second ring (49) defining said second metal sealing surface (52) and being positioned axially adjacent the first sealing surface on the metal ring, the second metal sealing surface (52) being formed from a metallic material which is harder than the metallic material forming the first sealing surface (47), the first and second sealing surfaces (47,52) being prelapped to substantially perfect a seal between the sealing surfaces (47,52) prior to insertion of the two metal rings (44,49) into the seal cavity (48).

2. A metal-to-metal seal according to Claim 1 characterised in that the surface area of the first sealing surface (47) is smaller than the surface area of the second sealing surface (52) for compensating for eccentricities which may develop between the first and second prelapped seal surfaces (47,52) during operation of the rotary cone rock bit (10) in a borehole.

3. A metal-to-metal seal according to Claim 1 or to Claim 2, characterized in that in the material forming the first sealing surface (47) has a Rockwell C hardness in the range of from 42 to 62.

4. A metal-to-metal seal according to any one of the preceding claims, characterized in that the material forming the first sealing surface (47) comprises by weight 3.0 percent nickel plus iron, 28.5 percent molybdenum, 17.5 percent chromium, 3.4 percent silicon, 0.08 percent carbon and the balance cobalt, with a Rockwell C hardness of 62.

5. A metal-to-metal seal according to any preceding claim, characterized in that the metal forming the first sealing surface (47) is stellite with a Rockwell C hardness in the range of from 42 to 62.

6. A metal-to-metal seal according to any preceding claim, characterized in that the first and second sealing surfaces (47,52) are lapped flat within two helium light bands.

7. A metal-to-metal seal according to any preceding claim, characterized in that the material forming the second sealing surface (52) is tungsten carbide with a Rockwell C hardness of 72 when the material forming the first sealing surface (47) is a metallic alloy having a Rockwell C hardness of 62.

8. A metal-to-metal seal according to any preceding claim, characterized in that the second metal ring (49) is metallurgically secured within the circumferential cavity (48) in the cone (28).

9. A metal-to-metal seal according to any preceding claim, characterized in that the surface finish of the first and second sealing surfaces (47,52) is 0.05 to 0.3 micrometers rms.

10. A metal-to-metal seal according to any preceding claim, characterized in that the first metal ring (44) is partially encapsulated within the resilient material (42), the first sealing surface (47) being exposed.

11. A metal-to-metal seal according to any preceding claim, characterized in that the resilient material (42) is nitrile rubber.

12. A metal-to-metal seal according to any preceding claim, characterized in that the first sealing surface (147) of the first metal ring (144) is urged against the second sealing surface (152) by a resilient O-ring (142).

13. A metal-to-metal seal according to Claim 12, characterised in that the O-ring (142) is bonded to the first metal ring (144).

14. A metal-to-metal seal according to Claims 1 to 9 characterized in that the first sealing surface (357) of the first metal ring (354) is urged against the second metal (359) sealing surface by a Belleville spring (342).

15. A metal-to-metal seal according to Claim 14 characterised in that the Belleville spring (342) is encapsulated in a rubber-like material (348).

16. A metal-to-metal seal according to Claim 15, characterised in that the first metal ring (454) is secured to the rubber-like material at the outer peripheral edge of the Belleville spring (462) and the first sealing surface (457) on the first metal ring (454) is exposed.

## Patentansprüche

1. Metall-Metall-Dichtung (40) für einen sich drehenden Gesteinsbohrmeißel (10), wobei die Dichtung (10) in einer Dichtkammer (48) angeordnet ist, die zwischen einem Schenkel (14) des Gesteinsbohrmeißels (10) und einem sich drehenden Konus (28) vorgesehen ist, der auf einem Achszapfen befestigt ist, der sich von dem Schenkel (14) des Meißels (10) wegerstreckt, wobei die Dichtung (40) einen ersten Metallring (44) und eine erste Dichtoberfläche (47), die aus einem metallischen Material an der einen axialen Seite des Metallrings (44) ausgebildet ist, der als Teil der Metall-Metall-Dichtung (40) dient, und ein biegsames Material (42) umfaßt, das innerhalb der Dichtkammer (48) eingeschlossen und auf der gegenüber liegenden axialen Seite des ersten Metallringes (44) zur ersten Dichtoberfläche (47) hin angeordnet ist, um die erste metallische Dichtoberfläche (47) gegen eine zweite metallische Dichtoberfläche (52) zu drücken, um die ersten und zweiten Dichtoberflächen (47, 52) in dichtendem Eingriff zu halten, **dadurch gekennzeichnet,** daß ein zweiter Ring (49) in einem umkreisförmigen Hohlraum in den Konus (28) eingeführt und mit diesem Konus (28) verbunden ist, wobei der zweite Ring (49) die zweite metallische Dichtoberfläche (52) begrenzt und axial benachbart zur ersten Dichtoberfläche an dem Metallring angeordnet ist, wobei die zweite metallische Dichtoberfläche (52) aus einem metallischen Material hergestellt ist, welches härter als das metallische Material ist, welches die erste Dichtoberfläche (47) bildet, wobei die ersten und zweiten Dichtoberflächen (47, 52) vorgeläppt sind, um eine Dichtung zwischen den Dichtoberflächen (47, 52) im wesentlichen zu vollenden, bevor die beiden Metallringe (44, 49) in die Dichtkammer (48) eingesetzt werden.

2. Metall-Metall-Dichtung nach Anspruch 1, dadurch gekennzeichnet, daß der Oberflächenbereich der ersten Dichtoberfläche (47) kleiner als der Oberflächenbereich der zweiten Dichtoberfläche (52) ist, um Exzentrizitäten zu kompensieren, die sich zwischen den ersten und zweiten vorgeläppten Dichtoberflächen (47, 52) während der Betätigung des sich drehenden Konus-Gesteinsbohrmeißels in einem Bohrloch ausbilden können.

3. Metall-Metall-Dichtung nach Anspruch 1 oder Anspruch 2, dadurch gekennzeichnet, daß in dem Material die erste Dichtoberfläche (47) eine Rockwell C Härte im Bereich zwischen 42 und 62 aufweist.

4. Metall-Metall-Dichtung nach irgendeinem der vorstehenden Ansprüche, dadurch gekennzeichnet, daß das Material, welches die erste Dichtoberfläche (47) bildet, aus einem Material besteht, welches 3 Gewichtsprozent Nickel + Eisen, 28,5 Gewichtsprozent Molybdän, 17,5 Gewichtsprozent Chrom, 3,4 Gewichtsprozent Silizium, 0,08 Gewichtsprozent Kohlenstoff und den auffüllenden Rest Kobalt umfaßt, und eine Rockwell C Härte von 62 aufweist.

5. Metall-Metall-Dichtung nach irgendeinem der vorstehenden Ansprüche, dadurch gekennzeichnet, daß das Metall, welches die erste Dichtoberfläche (47) bildet, Stellite mit einer Rockwell C Härte im Bereich zwischen 42 und 62 ist.

6. Metall-Metall-Dichtung nach irgendeinem der vorstehenden Ansprüche, dadurch gekennzeichnet, daß die ersten und zweiten Dichtoberflächen (47, 52) innerhalb von zwei Heliumwellenlängen flach geläppt sind.

7. Metall-Metall-Dichtung nach irgendeinem der vorstehenden Ansprüche, dadurch gekennzeichnet, daß das die zweite Dichtoberfläche (52) bildende Material Wolframkarbid mit einer Rockwell C Härte von 72 ist, wenn das Material, welches die erste Dichtoberfläche (47) bildet, eine Metallegierung mit einer Rockwell C Härte von 62 ist.

8. Metall-Metall-Dichtung nach irgendeinem der vorstehenden Ansprüche, dadurch gekennzeichnet, daß der zweite Metallring (49) metallurgisch innerhalb des umkreisförmigen Hohlraums (48) in dem Konus (28) befestigt ist.

9. Metall-Metall-Dichtung nach irgendeinem der vorstehenden Ansprüche, dadurch gekennzeichnet, daß die Oberflächenbearbeitung der ersten und zweiten Dichtoberflächen (47, 52) zwischen 0,05 und 0,3 Mikrometer im mittleren quadratischen Fehler beträgt.

10. Metall-Metall-Dichtung nach irgendeinem der vorstehenden Ansprüche, dadurch gekennzeichnet, daß der erste Metallring (44) teilweise innerhalb des biegsamen Materials (42) verkapselt ist, wobei die erste Dichtoberfläche (47) nach außen gewandt ist.

11. Metall-Metall-Dichtung nach irgendeinem der vorstehenden Ansprüche, dadurch gekennzeichnet, daß das biegsame Material (42) Nitril-Gummi ist.

12. Metall-Metall-Dichtung nach irgendeinem der vorstehenden Ansprüche, dadurch gekennzeichnet, daß die erste Dichtoberfläche (147) des ersten Metallringes (144) durch einen biegsamen O-Ring (142) gegen die zweite Dichtoberfläche (152) gedrückt wird.

13. Metall-Metall-Dichtung nach Anspruch 12, dadurch gekennzeichnet, daß der O-Ring (142) an dem ersten Metallring (144) gebonded ist.

14. Metall-Metall-Dichtung nach einem der Ansprüche 1 bis 9, dadurch gekennzeichnet, daß die erste Dichtoberfläche (357) des ersten Metallringes (354) durch eine Belleville-Feder (342) gegen die zweite Metalldichtoberfläche (359) gedrückt wird.

15. Metall-Metall-Dichtung nach Anspruch 14, dadurch gekennzeichnet, daß die Belleville-Feder (342) in einem gummiartigen Material (348) eingekapselt ist.

16. Metall-Metall-Dichtung nach Anspruch 15, dadurch gekennzeichnet, das der erste Metallring (454) an dem gummiartigen Material an dem äußeren umkreisförmigen Rand der Belleville-Feder (462) befestigt ist und die erste Dichtoberfläche (457) auf dem ersten Metallring (454) übersteht.

## Revendications

1. Joint d'étanchéité (40) métal sur métal pour un trépan tournant à cônes (10) pour roche, ce joint d'étanchéité (40) étant disposé dans une cavité d'étanchéité (48) ménagée entre une jambe (14) du trépan (10) et un cône tournant (28) monté sur un tourillon s'étendant à partir de la jambe (14) du trépan (10), ce joint d'étanchéité (40) comprenant un premier anneau métallique (44) et une première surface d'étanchéité (47) formée à partir d'une matière métallique sur un côté en sens axial de l'anneau métallique (44) constituant une partie du joint d'étanchéité (40) métal sur métal, et une matière souple (42) confinée à l'intérieur de la cavité d'étanchéité (48) et disposée sur le côté opposé en sens axial à la première surface d'étanchéité (47) du premier anneau métallique (44) pour pousser cette première surface métallique d'étanchéité (47) contre une seconde surface métallique d'étanchéité (52) afin de tenir ces première et seconde surfaces d'étanchéité (47, 52) en contact d'étanchéité, le joint d'étanchéité étant caractérisé par :
un second anneau (49) introduit dans une cavité circonférentielle du cône (28) et fixé à ce cône (28), ce second anneau (49) définissant la seconde surface métallique d'étanchéité (52) et étant disposé en sens axial à proximité de la première surface d'étanchéité sur l'anneau métallique, la seconde surface métallique d'étanchéité (52) étant formée à partir d'une matière métallique qui est plus dure que la matière métallique constituant la première surface d'étanchéité (47), la première surface et la seconde surface d'étanchéité (47, 52) étant pré-rodées pour parfaire substantiellement un contact d'étanchéité entre les surfaces d'étanchéité (47, 52) avant l'introduction des deux anneaux métalliques (44, 49) à l'intérieur de la cavité d'étanchéité (48).

2. Joint d'étanchéité métal sur métal selon la revendication 1 caractérisé en ce que l'aire de la surface de la première surface d'étanchéité (47) est plus petite que l'aire de la surface de la seconde surface d'étanchéité (52) pour compenser les excentrations qui peuvent se produire entre la première surface et la seconde surface d'étanchéité (47, 52) pré-rodées pendant le fonctionnement du trépan tournant (10) à cônes dans un trou de forage.

3. Joint d'étanchéité métal sur métal selon la revendication 1 ou la revendication 2 caractérisé en ce que la matière constituant la première surface d'étanchéité (47) a une dureté Rockwell C se situant dans la gamme de 42 à 62.

4. Joint d'étanchéité métal sur métal selon l'une quelconque des revendications précédentes caractérisé en ce que la matière constituant la première surface d'étanchéité (47) comprend, en poids, 3 % de nickel plus du fer, 28,5 % de molybdène, 17,5 % de chrome, 3,4 % de silicium, 0,08 % de carbone et le solde étant du cobalt, avec une dureté Rockwell C de 62.

5. Joint d'étanchéité métal sur métal selon l'une quelconque des revendications précédentes caractérisé en ce que le métal constituant la première surface d'étanchéité (47) est de la stellite avec une dureté Rockwell C se situant dans la gamme de 42 à 62.

6. Joint d'étanchéité métal sur métal selon l'une quelconque des revendications précédentes caractérisé en ce que la première surface et la seconde surface d'étanchéité (47, 52) sont pré-rodées à plat à l'intérieur de deux bandes légères d'hélium.

7. Joint d'étanchéité métal sur métal selon l'une quelconque des revendications précédentes caractérisé en ce que la matière constituant la seconde surface d'étanchéité (52) est du carbure de tungstène avec une dureté Rockwell C de 72 cependant que la matière constituant la première surface d'étanchéité (47) est un alliage métallique ayant une dureté Rockwell C de 62.

8. Joint d'étanchéité métal sur métal selon l'une quelconque des revendications précédentes caractérisé en ce que le second anneau métallique (49) est fixé métallurgiquement à l'intérieur de la cavité circonférentielle (48) du cône (28).

9. Joint d'étanchéité métal sur métal selon l'une quelconque des revendications précédentes caractérisé en ce que la finition de surface de la première surface et de la seconde surface d'étanchéité (47, 52) est de 0,05 à 0,3 micromètres, écart moyen géométrique.

10. Joint d'étanchéité métal sur métal selon l'une quelconque des revendications précédentes caractérisé en ce que le premier anneau métallique (44) est partiellement encapsulé à l'intérieur de la matière souple (42), la première surface d'étanchéité (47) étant exposée.

11. Joint d'étanchéité métal sur métal selon l'une quelconque des revendications précédentes caractérisé en ce que la matière souple (42) est du caoutchouc nitrile.

12. Joint d'étanchéité métal sur métal selon l'une quelconque des revendications précédentes caractérisé en ce que la première surface d'étanchéité (147) du premier anneau métallique (144) est pressée contre la seconde surface d'étanchéité (152) par un joint torique souple (142).

13. Joint d'étanchéité métal sur métal selon la revendication 12 caractérisé en ce que le joint torique (142) est adhérent au premier anneau métallique (144).

14. Joint d'étanchéité métal sur métal selon les revendications 1 à 9 caractérisé en ce que la première surface d'étanchéité (357) du premier anneau métallique (354) est pressée contre la seconde surface d'étanchéité métallique (359) par une rondelle Belleville (342).

15. Joint d'étanchéité métal sur métal selon la revendication 14 caractérisé en ce que la rondelle Belleville (342) est encapsulée dans une matière (348) analogue à du caoutchouc.

16. Joint d'étanchéité métal sur métal selon la revendication 15 caractérisé en ce que le premier anneau métallique (454) est fixé à la matière analogue à du caoutchouc au bord périphérique extérieur de la rondelle Belleville (462) et la première surface d'étanchéité (457) du premier anneau métallique (454) est exposée.
